# FASCICULE DE BREVET EUROPEEN

(11) **EP 2 681 004 B1**
(45) Date de publication et mention de la délivrance du brevet: **28.11.2018**
(21) Numéro de dépôt: 12712299.2
(22) Date de dépôt: 29.02.2012
(51) Int. Cl.: B23K 20/02, C22C 47/20, C22C 47/06, B23P 15/04, B64C 11/20, F01D 5/14, F01D 5/28, F04D 29/38

(54) **PROCÉDÉ DE RÉALISATION D'UNE PIÈCE MÉTALLIQUE TELLE QU'UN RENFORT D'AUBE DE TURBOMACHINE**
VERFAHREN ZUR HERSTELLUNG EINES METALLBAUTEILS WIE EINER TURBOMASCHINENSCHAUFELKANTENVERSTÄRKUNG
METHOD FOR PRODUCING A METAL COMPONENT SUCH AS A TURBOMACHINE BLADE EDGE REINFORCEMENT PIECE

(30) Priorité: 01.03.2011 FR 1151649
(43) Date de publication de la demande: 08.01.2014
(73) Titulaire: Safran Aircraft Engines, 75015 Paris (FR)
(72) Inventeur: GODON, Thierry, F-93270 Sevran (FR); DAMBRINE, Bruno, Jacques, Gérard, F-77820 Le Chatelet en Brie (FR); PERROUX, Alain, Robert, Yves, F-91130 Ris Orangis (FR)
(74) Mandataire: Camus, Olivier Jean-Claude
(86) Numéro de dépôt international: PCT/FR2012/050422
(87) Numéro de publication internationale: WO 2012/117200

(56) Documents cités:
- EP-A1- 0 993 939
- EP-A1- 1 719 699
- WO-A2-2012/114053
- DE-A1- 10 005 250
- US-A- 5 439 750
- US-A- 5 440 806

## Description

La présente invention concerne un procédé de réalisation d'une pièce métallique telle qu'un renfort métallique d'aube composite ou métallique de turbomachine.

Plus particulièrement, l'invention concerne un procédé de réalisation d'un renfort métallique de bord d'attaque ou de bord de fuite d'aube de turbomachine.

Le domaine de l'invention est celui des turbomachines et plus particulièrement celui des aubes de soufflante, en matériau composite ou métallique, de turbomachine et dont le bord d'attaque comporte un renfort structurel métallique.

Toutefois, l'invention est également applicable à la réalisation d'un renfort métallique destiné à renforcer un bord d'attaque ou un bord de fuite d'aube de tout type de turbomachine, terrestre ou aéronautique, et notamment un turbomoteur d'hélicoptère ou un turboréacteur d'avion, mais également d'hélices telles que des hélices de double soufflantes contrarotatives non carénées (« open rotor » en langue anglaise).

L'invention est également applicable à la réalisation de toutes pièces métalliques massives et de forme géométrique complexe.

On rappelle que le bord d'attaque correspond à la partie antérieure d'un profil aérodynamique qui fait face au flux d'air et qui divise l'écoulement d'air en un écoulement d'air d'intrados et en un écoulement d'air extrados. Le bord de fuite correspond à la partie postérieure d'un profil aérodynamique où se rejoignent les écoulements intrados et extrados.

Les aubes de turbomachine, et notamment les aubes de soufflante, subissent d'importantes contraintes mécaniques, liées notamment à la vitesse de rotation, et doivent satisfaire à des conditions strictes de poids et d'encombrement. Par conséquent, on utilise des aubes en matériaux composites qui sont plus légères.

Il est connu d'équiper les aubes de soufflante d'une turbomachine, réalisées en matériaux composites, d'un renfort structurel métallique s'étendant sur toute la hauteur de l'aube et au-delà de leur bord d'attaque comme mentionné dans le document EP1908919. Un tel renfort permet de protéger l'aubage composite lors d'un impact d'un corps étranger sur la soufflante, tel que par exemple un oiseau, de la grêle ou encore des cailloux.

En particulier, le renfort structurel métallique protège le bord d'attaque de l'aube composite en évitant des risques de délaminage, de rupture de fibre ou encore d'endommagement par décohésion fibre/matrice.

De façon classique, une aube de turbomachine comporte une surface aérodynamique s'étendant, selon une première direction, entre un bord d'attaque et un bord de fuite et, selon une deuxième direction sensiblement perpendiculaire à la première direction, entre un pied et un sommet de l'aube. Le renfort structurel métallique épouse la forme du bord d'attaque de la surface aérodynamique de l'aube et s'étend selon la première direction au-delà du bord d'attaque de la surface aérodynamique de l'aube pour épouser le profil de l'intrados et de l'extrados de l'aube et selon la deuxième direction entre le pied et le sommet de l'aube.

De façon connue, le renfort structurel métallique est une pièce métallique en titane réalisée entièrement par fraisage à partir d'un bloc de matière.

Cependant, le renfort métallique d'un bord d'attaque d'aube est une pièce complexe à réaliser, nécessitant de nombreuses opérations de reprises et des outillages complexes impliquant des coûts de réalisation importants. Le document EP1719699 A1 décrit un exemple de fabrication d'un tel renfort par colaminage à chaud de deux plaques en alliage d'aluminium et par mise en forme de la plaque finale par forgeage ou matriçage.

Dans ce contexte, l'invention vise à résoudre les problèmes mentionnés ci-dessus en proposant un procédé de réalisation d'un renfort métallique de bord d'attaque ou de bord de fuite d'aube de turbomachine permettant de réduire significativement les coûts de réalisation d'une telle pièce et de simplifier la gamme de fabrication.

A cette fin, l'invention propose un procédé de réalisation d'une pièce métallique, telle qu'un renfort métallique d'aube de turbomachine, comportant successivement :
- une étape de réalisation d'une structure métallique tridimensionnelle constituée par un insert présentant des propriétés permettant le formage superplastique et le soudage diffusion et par une pluralité de fils métalliques, chaque fil métallique de ladite pluralité encerclant la périphérie dudit insert, ladite structure métallique formant une préforme de ladite pièce métallique ;
- une étape de positionnement de ladite structure métallique dans un outillage de forme :
   - une étape de pressage à chaud de ladite structure métallique tridimensionnelle provoquant l'agglomération de ladite structure métallique de manière à obtenir ladite pièce métallique compacte.

Grâce à l'invention, la pièce métallique, telle que par exemple un renfort structurel métallique comportant deux courbures selon deux plans distincts (ou un vrillage selon un axe), est réalisée de façon simple et rapide par la réalisation préalable d'une structure métallique formée par l'association d'un insert et de fils métalliques mis en forme de façon à créer un enroulement métallique autour de l'insert, créant ainsi un squelette métallique autour de l'insert, et d'un procédé de pressage et/ou de compactage à chaud permettant d'obtenir une pièce compacte. Avantageusement, le procédé de pressage à chaud est un procédé de pressage ou de compactage isostatique (HIP pour Hot Isostatic Pressing en langue anglaise) permettant d'obtenir une pièce compacte et sans porosité par la combinaison de déformation plastique, de fluage et de soudage diffusion.

Les fils métalliques sont issus d'une filière pouvant être indifféremment de sections circulaire, carré, hexagonale, etc.

Avantageusement, l'insert est réalisé en respectant la forme de la fibre neutre de la pièce à réaliser de sorte que la structure métallique confectionnée forme une préforme de la pièce à réaliser facilement positionnable dans l'outillage de forme.

La structure métallique confectionnée est par conséquent une structure facilement transportable et positionnable dans l'outillage de forme, quelle que soit la forme complexe de la pièce à réaliser, telles que des renforts d'aube, des pièces présentant des formes non développables, ou encore des pièces présentant des formes enveloppantes comme par exemple une pièce recouvrant en partie les extrémités d'une aube.

Avantageusement, les longueurs et les diamètres des fils métalliques utilisés pour réaliser la structure métallique sont variables et dépendantes de la forme de la pièce à réaliser, telle que par exemple un renfort d'aube.

Ce procédé de réalisation permet ainsi de s'affranchir de la réalisation complexe du renfort d'aube par usinage dans la masse, de type fraisage, brochage, à partir de méplats nécessitant de grand volume de matière de mise en oeuvre et par conséquent des coûts importants en approvisionnement de matière première. Le procédé permet également de réaliser facilement des renforts métalliques qui respectent des exigences strictes de masse et/ou géométriques.

Avantageusement, la pièce métallique est un renfort métallique de bord d'attaque ou de bord de fuite d'aube de soufflante de turbomachine.

Le procédé de réalisation d'une pièce métallique selon l'invention peut également présenter une ou plusieurs des caractéristiques ci-dessous, considérées individuellement ou selon toutes les combinaisons techniquement possibles :
- ledit procédé est un procédé de réalisation d'un renfort métallique de bord d'attaque, ou de bord de fuite, d'aube de turbomachine ou d'un renfort métallique d'hélice de sorte que ladite pièce métallique obtenue lors de ladite étape de pressage à chaud est un renfort métallique ;
- ladite étape de pressage à chaud est une étape de pressage isostatique ou une étape de forgeage isotherme ;
- ladite étape de réalisation d'une structure métallique tridimensionnelle comporte successivement :
   - une première sous-étape de fabrication d'un insert ;
   - une deuxième sous-étape d'enroulement d'une pluralité de fils métalliques autour dudit insert ;
- ladite étape de réalisation d'une structure métallique tridimensionnelle comporte successivement :
   - une première sous-étape de fabrication d'un insert ;
   - une deuxième sous-étape de pliage de ladite pluralité de fils métalliques de sorte que chaque fil métallique présente au moins une boucle ;
   - une troisième sous-étape d'insertion dudit insert dans chacune desdites boucles de ladite pluralité de fils métalliques ;
- ladite sous-étape de fabrication dudit insert est réalisée par forgeage ou usinage ou par coulée ou par un procédé de tissage tridimensionnel ;
- ledit insert est un insert métallique ;
- lesdits fils métalliques de ladite pluralité sont pliés en forme de A ;
- lesdits fils métalliques sont des fils métalliques à base de titane et/ou des fils de SiC-Titane et/ou des fils de SiC-Bore ;
- ledit procédé comporte successivement :
   - une étape de réalisation d'une pluralité de structures métalliques tridimensionnelles constituée par un insert et par une pluralité de fils métalliques entourant ledit insert, ladite pluralité de structures métalliques formant une préforme de ladite pièce métallique ;
   - une étape de positionnement de ladite pluralité de structures métalliques dans un outillage de forme :
   - une étape de pressage à chaud de ladite pluralité de structures métalliques tridimensionnelles provoquant l'agglomération de ladite pluralité de structures métalliques de manière à obtenir ladite pièce métallique.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue latérale d'une aube comportant un renfort structurel métallique de bord d'attaque obtenu au moyen du procédé de réalisation selon l'invention ;
- la figure 2 est une vue partielle en coupe de l'aube illustrée à la figure 1 selon un plan de coupe AA ;
- la figure 3 est un schéma synoptique présentant les principales étapes de réalisation d'un renfort structurel métallique de bord d'attaque d'aube de turbomachine du procédé de réalisation selon l'invention ;
- les figures 4a, 4b, 4c représentent des tronçons d'un renfort métallique de bord d'attaque d'aube de turbomachine illustrant différentes phases de la première étape du procédé illustré à la figure 3 ;

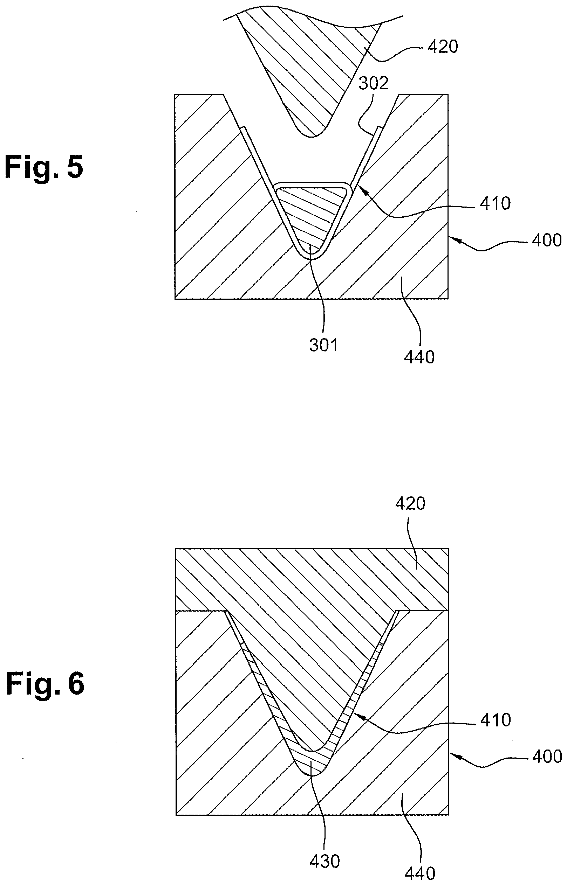

- la figure 5 représente un tronçon d'un renfort métallique de bord d'attaque d'aube de turbomachine lors de la deuxième étape du procédé illustré à la figure 3 ;
- la figure 6 illustre une vue du renfort métallique de bord d'attaque d'aube de turbomachine lors de la troisième étape du procédé illustré à la figure 3.

Dans toutes les figures, les éléments communs portent les mêmes numéros de référence sauf précision contraire.

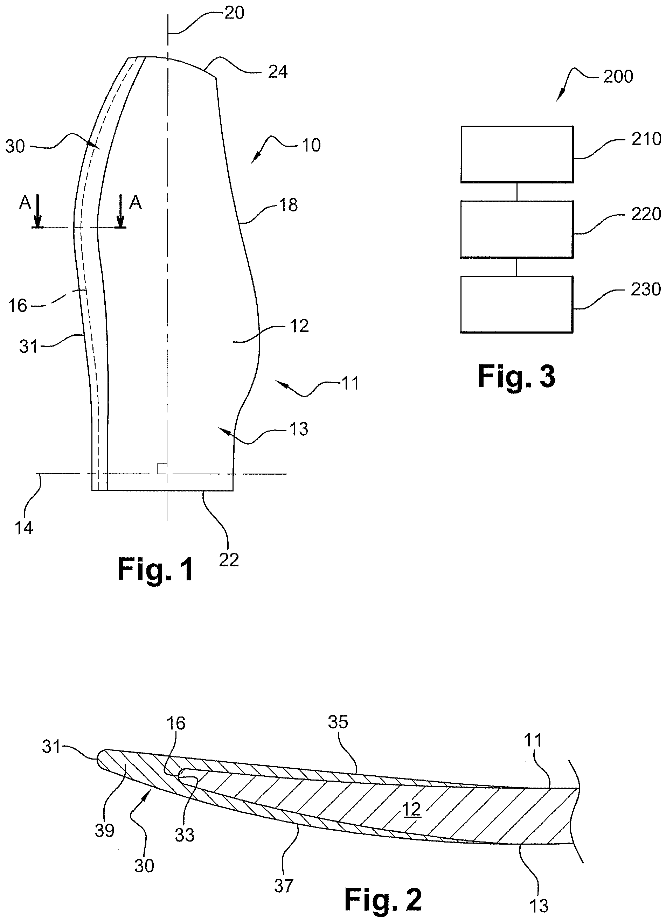

La figure 1 est une vue latérale d'une aube comportant un renfort structurel métallique de bord d'attaque obtenu au moyen du procédé de réalisation selon l'invention.

L'aube 10 illustrée est par exemple une aube mobile de soufflante d'une turbomachine (non représentée).

L'aube 10 comporte une surface aérodynamique 12 s'étendant selon une première direction axiale 14 entre un bord d'attaque 16 et un bord de fuite 18 et selon une deuxième direction radiale 20 sensiblement perpendiculaire à la première direction 14 entre un pied 22 et un sommet 24.

La surface aérodynamique 12 forme la face extrados 13 et intrados 11 de l'aube 10, seule la face extrados 13 de l'aube 10 est représentée sur la figure 1. L'intrados 11 et l'extrados 13 forment les faces latérales de l'aube 10 qui relient le bord d'attaque 16 au bord de fuite 18 de l'aube 10.

Dans ce mode de réalisation, l'aube 10 est une aube composite obtenue typiquement par mise en forme d'une texture fibreuse tissée. A titre d'exemple, le matériau composite utilisé peut être composé par un assemblage de fibres de carbone tissées et d'une matrice résineuse, l'ensemble étant formé par moulage au moyen d'un procédé d'injection de résine de type RTM (pour « Resin Transfer Molding ») ou encore VARTM (pour Vaccum Resin Transfer Molding).

L'aube 10 comporte un renfort structurel métallique 30 collé au niveau de son bord d'attaque 16 et qui s'étend à la fois selon la première direction 14 au-delà du bord d'attaque 16 de la surface aérodynamique 12 de l'aube 10 et selon la deuxième direction 20 entre le pied 22 et le sommet 24 de l'aube.

Comme représenté à la figure 2, le renfort structurel 30 épouse la forme du bord d'attaque 16 de la surface aérodynamique 12 de l'aube 10 qu'il prolonge pour former un bord d'attaque 31, dit bord d'attaque du renfort.

De façon classique, le renfort structurel 30 est une pièce monobloc comportant une section sensiblement en forme de V présentant une base 39 formant le bord d'attaque 31 et prolongée par deux flancs latéraux 35 et 37 épousant respectivement l'intrados 11 et extrados 13 de la surface aérodynamique 12 de l'aube. Les flancs 35, 37 présentent un profil effilé ou aminci en direction du bord de fuite de l'aube.

La base 39 comporte un profil interne 33 arrondi apte à épouser la forme arrondie du bord d'attaque 16 de l'aube 10.

Le renfort structurel 30 est métallique et préférentiellement à base de titane. Ce matériau présente en effet une grande capacité d'absorption de l'énergie due aux chocs. Le renfort est collé sur l'aube 10 au moyen de colle connue de l'homme du métier, comme par exemple une colle époxy.

Ce type de renfort structurel métallique 30 utilisé pour le renfort d'aube composite de turbomachine est plus particulièrement décrit dans la demande de brevet EP1908919.

Le procédé selon l'invention permet de réaliser notamment un renfort structurel tel qu'illustré à la figure 2, la figure 2 illustrant le renfort 30 dans son état final.

La figure 3 représente un schéma synoptique illustrant les principales étapes d'un procédé de réalisation 200 d'une pièce métallique permettant de réaliser par exemple un renfort structurel métallique 30 de bord d'attaque d'aube 10, tel qu'illustré aux figures 1 et 2.

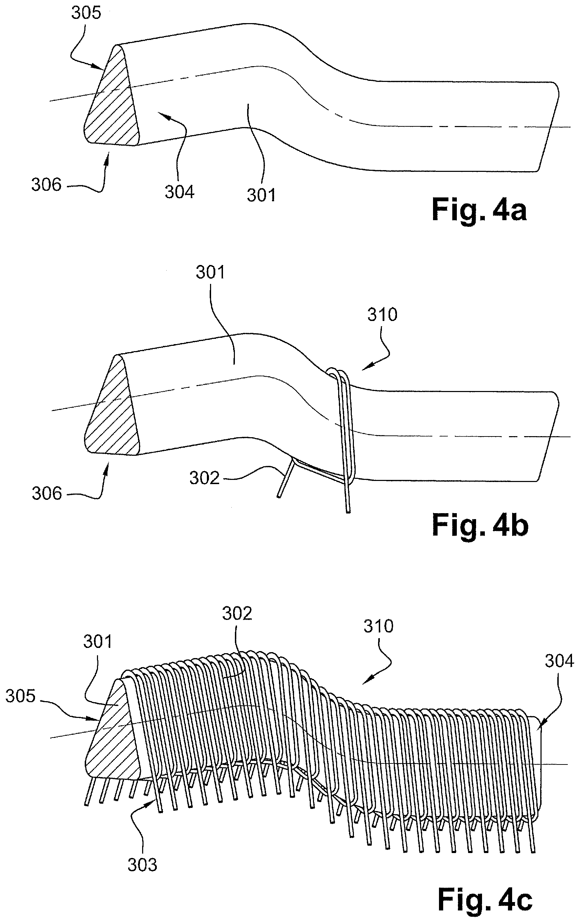

La première étape 210 du procédé de réalisation 200 est une étape de réalisation d'une structure métallique 310 formant une préforme de la pièce à réaliser par le procédé selon l'invention. Cette étape 210 est particulièrement illustrée aux figures 4a, 4b et 4c qui représentent différentes phases de cette première étape 210.

La structure métallique 310 est formée par l'association d'un insert 301 et d'un squelette métallique 303 formé par une pluralité de fils métalliques 302 encerclant la périphérie de l'insert 301 (figure 4c).

Selon un premier mode de réalisation, la première étape 210 du procédé de réalisation 200 est constituée par une première sous-étape de fabrication d'un insert 301 et par une deuxième sous-étape d'enroulement d'une pluralité de fils métalliques 302 autour de l'insert 301 de façon à réaliser le squelette métallique 303 englobant l'insert 301.

La première sous-étape, illustrée par la figure 4a, est une étape de fabrication d'un insert 301 dont la forme est déterminée en fonction de la forme finale de la pièce à réaliser. Dans l'exemple de réalisation d'un renfort métallique de bord d'attaque de turbomachine, l'insert 301 a la forme de la base 39 (figure 2) du renfort métallique et présente deux courbures selon deux plans distincts (ou un vrillage selon un axe) respectant la fibre neutre du bord d'attaque de l'aube. A cet effet, l'insert 301 est sensiblement en forme de triangle présentant deux flancs latéraux 304, 305 et une base 306.

L'insert 301 peut être un insert rigide, tel qu'un insert massif, réalisé par exemple par un procédé de forgeage, d'usinage, par coulé ou un insert souple, tel qu'un insert tissé réalisé par un procédé de tissage tridimensionnel.

Quel que soit le type de procédé utilisé pour la réalisation de l'insert, l'insert 301 peut être directement réalisé à la forme désirée (i.e. sans étape supplémentaire de déformation) ou peut être réalisé en deux opérations successives (si la nature du matériau de l'insert le permet) : une première opération consistant à réaliser une pièce sensiblement rectiligne et une deuxième opération consistant à mettre en forme la pièce rectiligne de façon à réaliser l'insert à la forme désirée (i.e. avec les deux courbures pour la réalisation d'un renfort métallique d'aube de turbomachine).

Pour la réalisation d'un renfort d'aube de turbomachine, l'insert 301 est avantageusement un insert métallique à base de titane.

Lorsque l'insert métallique 301 est réalisé par un procédé de tissage, l'insert est tissé au moyen de fils métalliques par exemple avec des fils de titane et/ou des fils à base de carbure de silicium et de titane (SiC-Ti), et/ou des fils enduits de Bore (SiC-Bore). Les fils pourraient également être des fils non métalliques en Carbure de Silicium SiC-SiC).

Quelle soit le matériau utilisé pour la réalisation de l'insert 301, il est nécessaire que ce matériau en question présente des propriétés permettant le formage superplastique et le soudage diffusion. Dans l'exemple de réalisation d'un renfort métallique d'aube de turbomachine, l'insert métallique 301 est avantageusement réalisé en titane.

Pour la réalisation d'un renfort métallique creux (non représenté), l'insert métallique est remplacé par un « insert fugitif » réalisé dans un matériau différent du matériau utilisé pour la réalisation du renfort métallique. On entend par « insert fugitif » un insert qui n'est pas destiné à être permanent et qui est seulement nécessaire à la réalisation du renfort métallique creux de bord d'attaque. L'insert fugitif n'est donc pas présent dans le renfort métallique dans son état final et ne participe aucunement aux caractéristiques mécaniques du renfort métallique.

L'insert fugitif est par exemple réalisé dans un matériau capable de résister à une haute température, de l'ordre de 900°C, une haute pression, de l'ordre de 1000 bar, et qui est compatible avec les matériaux utilisés par la réalisation du renfort métallique de façon à ne pas créer d'impuretés ou d'oxydation.

Le matériau de l'insert fugitif doit également pouvoir être attaqué chimiquement par dissolution au moyen d'un agent chimique.

Avantageusement, l'insert fugitif est réalisé en cuivre, ou en quartz ou en silice.

La forme de l'insert fugitif est dépendante de la forme de la cavité interne finale désirée dans le renfort métallique.

La deuxième sous-étape est une étape d'enroulement d'une pluralité de fils métalliques initialement de forme rectiligne autour de l'insert 301.

Selon un exemple de réalisation de l'enroulement illustré à la figure 4b, le fil métallique 302 est enroulé sur l'insert 301 de façon à réaliser au moins une boucle autour de l'insert 301. Selon l'exemple d'enroulement illustré aux figures 4b et 4c, l'étape d'enroulement des fils métalliques est réalisé de sorte que pour un fil métallique enroulé autour de l'insert 301, l'insert 301 présente sur ses flancs latéraux 304, 305 deux passes de fil métallique et sur sa base 306 une seule passe de fil métallique.

Ainsi, l'enroulement débute sur le premier flanc latéral 305 de l'insert 301, le fils métallique est ensuite plié au niveau du sommet de l'insert 301 de sorte que le fil métallique vienne en contact avec le deuxième flanc latéral 304 de l'insert 301. Ensuite, le fil métallique est de nouveau plié au niveau de la jonction entre le deuxième flanc 304 et la base 306 afin de venir épouser la base de l'insert 301. L'enroulement se termine par le passage du fil métallique de nouveau sur le premier flanc latéral 305 puis sur le deuxième flanc latéral 304.

Ainsi, le fil enroulé 302 est formé par cinq portions rectilignes entourant l'insert 301.

L'insert 301 est donc entouré par une pluralité de fils métallique enroulés 302 et qui forment le squelette métallique 303 de la structure métallique 310. La figure 4c illustre particulièrement la fin de la sous-étape d'enroulement.

La sous-étape d'enroulement peut être réalisée à partir d'un fil continu rectiligne coupé à la longueur désirée une fois l'enroulement achevé ou à partir d'une pluralité de fils métalliques rectilignes préalablement coupés à la longueur désirée.

L'épaisseur de la pièce à réaliser pouvant varier, l'épaisseur des fils métalliques utilisés peuvent être variables le long de la pièce.

L'espace séparant deux fils métalliques enroulés 302 (i.e. le pas de positionnement des fils métalliques) est défini en fonction de l'épaisseur du fil métallique 302 et des besoins matière nécessaires à la réalisation de la pièce. La pièce métallique à réaliser pouvant être d'épaisseur variable, le pas de positionnement des fils métalliques peut être variable et les épaisseurs des fils métalliques peuvent être également différentes le long de la pièce de manière à correspondre aux épaisseurs variables de la pièce.

L'exemple d'enroulement de fils métalliques, illustré aux figures 4b et 4c, n'est pas limitatif et d'autres types d'enroulement autour de l'insert 301 sont également possible.

La sous-étape d'enroulement peut également consister à enrouler plusieurs couches de fils métalliques 302 autour de l'insert 301.

Ce premier exemple de réalisation de la structure métallique 310 est particulièrement bien adapté avec l'utilisation d'un insert 301 rigide.

Selon un deuxième exemple de réalisation de la structure métallique 310, la première étape 210 du procédé de réalisation 200 est constituée par une première sous-étape de fabrication d'un insert 301 telle que décrite précédemment, par une deuxième sous-étape de pliage d'une pluralité de fils métalliques 302 sensiblement en forme de A présentant une boucle sensiblement à la forme de l'insert 301, et par une troisième étape d'introduction de l'insert fabriqué lors de la première sous-étape dans chaque boucle de chaque fils métalliques préalablement mis en forme lors de la deuxième sous-étape, de façon à réaliser un squelette métallique emprisonnant l'insert 301.

Ce deuxième exemple de réalisation est particulièrement bien adapté avec l'utilisation d'un insert souple, tel qu'un insert tissé.

Les fils métalliques (302) enroulés autour de l'insert sont principalement des fils de titane. Toutefois, il est possible d'incorporer dans la structure métallique 310 à base de fils en titane, des fils à base de carbure de silicium et de titane (SiC-Ti), de fils enduits de Bore (fil SiC-Bore) ou de Carbure de Silicium (fil SiC-SiC) de façon à créer de façon ponctuelle et localisée des renforts structurels dans la pièce à réaliser.

La deuxième étape 220 du procédé de réalisation 200 est une étape de positionnement de la structure métallique 310, réalisée lors de l'étape précédente, dans un outillage de forme 400.

L'outillage de forme 400 comporte une matrice 440 présentant une empreinte 410 correspondant à la forme externe finale du renfort métallique 30 (figure 1) et un poinçon 420 correspondant à la forme interne finale du renfort métallique de bord d'attaque.

L'étape 220 de positionnement est réalisée par positionnement de la structure métallique 310 dans l'empreinte 410 de la matrice 440 de l'outillage de forme 400.

La structure métallique tridimensionnelle 310, comportant sensiblement la forme complémentaire de l'empreinte 410, l'étape de positionnement se réalise simplement par emboîtement de la structure métallique formant la préforme de la pièce à réaliser. Cette étape est également facilitée par la possible déformation élastique des extrémités du squelette métallique formées par les extrémités rectilignes des fils métalliques 302.

Selon un autre exemple de réalisation, la préforme de la pièce à réaliser peut être constituée par une pluralité de structure métallique 310 telle que décrite précédemment. Dans cet exemple de réalisation, l'étape de positionnement est alors réalisée par positionnement des différentes structures métalliques tridimensionnelles 310 dans l'empreinte 410 de l'outillage de forme 400. Le positionnement est réalisé par positionnement successif des différentes structures métalliques 310 sur toute la longueur de l'empreinte 410 (i.e. selon l'axe longitudinal de l'empreinte). La division de la préforme en une pluralité de sections de structures métalliques permet donc de faciliter davantage le positionnement de la préforme de forme complexe dans l'empreinte 410 de l'outillage.

La troisième étape 230 du procédé de réalisation 200 est une étape de pressage à chaud de la structure métallique 310 positionnée dans l'outillage 400

Selon un premier exemple de réalisation, le pressage à chaud est un pressage isostatique (HIP pour Hot Isostatic Pressing en langue anglaise).

Le pressage isostatique à chaud est un procédé de fabrication très utilisé et connu pour réduire la porosité des métaux et influer sur la densité de nombreux matériaux. Le procédé de pressage isostatique permet d'améliorer en outre les propriétés mécaniques, l'exploitabilité des matériaux. Le pressage isostatique est réalisé à haute température (classiquement entre 400°C et 1400°C, et de l'ordre de 1000°C pour le titane) et à pression isostatique.

Ainsi, l'application de la chaleur combinée à la pression interne élimine les espaces vides de l'empilement, ainsi que les microporosités au moyen d'une combinaison de déformation plastique, de fluage, et de soudage diffusion de façon à former une pièce métallique massive 430.

Dans le cadre de la réalisation d'un renfort métallique d'aube de turbomachine, la pièce massive 430 résultant de l'étape de pressage isostatique comporte une forme approchée de la forme finale du renfort métallique 30. La pièce massive 430 est ensuite démoulée de l'outillage 400.

L'étape de pressage isostatique est réalisée sous vide, avantageusement sous vide secondaire soit dans un outillage soudé dans lequel le vide secondaire est réalisé, soit sous sac à l'autoclave, le choix du procédé dépendant du nombre de pièce à produire. Le vide secondaire permet d'éviter la présence d'oxygène dans l'outillage et au niveau de la structure métallique, lors de l'étape de pressage isostatique du titane.

Selon un deuxième exemple de réalisation, le pressage à chaud peut également être un procédé de forgeage isotherme sous presse dans une enceinte sous vide.

L'outillage est réalisé dans un alliage mécanique dit superalliage ou alliage à haute performance.

L'étape 230 de pressage à chaud peut comporter préalablement une étape de nettoyage, de dégraissage et/ou d'une attaque chimique de la structure métallique 310 de façon à supprimer les impuretés résiduelles des différents fils métalliques 302. Avantageusement, l'étape de nettoyage des impuretés est réalisée par trempage de la structure métallique 310 dans un bain d'agent nettoyant ou d'agent chimique.

Dans le cadre de fabrication d'un renfort métallique creux, le procédé selon l'invention peut comporter, après le démoulage de la pièce métallique, une étape supplémentaire d'attaque chimique de l'insert et faisant partie intégrante de la pièce métallique compactée 430. L'attaque chimique est réalisée au moyen d'un agent chimique apte à attaquer le matériau dans lequel l'insert est réalisé. L'attaque chimique de l'insert fugitif permet de dissoudre l'insert fugitif de sorte que l'espace libéré par l'insert dissout forme la cavité interne du renfort métallique creux. Avantageusement, l'étape d'attaque chimique est réalisée par trempage de la pièce massive 430 dans un bain comportant l'agent chimique apte à dissoudre l'insert. L'agent chimique est par exemple un acide ou une base.

Avantageusement, l'agent chimique est apte à dissoudre le cuivre, le quartz ou encore la silice.

En association avec ces principales étapes de réalisation, le procédé selon l'invention peut également comporter une étape de finition et de reprise par usinage de la pièce métallique massive obtenue à la sortie de l'outillage de façon à obtenir le renfort 30. Cette étape de reprise comporte :
- une étape de reprise du profil de la base 39 du renfort 30 de façon à l'affiner et notamment du profil aérodynamique du bord d'attaque 31 ;
- une étape de reprise des flancs 35, 37 ; cette étape consistant notamment au détourage des flancs 35, 37 et à l'amincissement des flancs intrados et extrados ;
- une étape de finition permettant d'obtenir l'état de surface requis.

En association avec ces principales étapes de réalisation, le procédé selon l'invention peut également comporter des étapes de contrôle non destructif du renfort 30 permettant de s'assurer de la conformité géométrique et métallurgique de l'ensemble obtenu. A titre d'exemple les contrôles non destructifs peuvent être réalisés par un procédé par rayon X.

La présente invention a été principalement décrite avec l'utilisation de fils métalliques à base de titane ; toutefois, le procédé de réalisation est également applicable avec n'importe quelle matière métallique présentant des propriétés permettant le formage superplastique et/ou le soudage diffusion, telle que des fils métalliques à base d'aluminium pour la réalisation d'une pièce en aluminium.

L'invention a été particulièrement décrite pour la réalisation d'un renfort métallique d'une aube composite de turbomachine ; toutefois, l'invention est également applicable pour la réalisation d'un renfort métallique d'une aube métallique de turbomachine.

L'invention a été particulièrement décrite pour la réalisation d'un renfort métallique d'un bord d'attaque d'aube de turbomachine ; toutefois, l'invention est également applicable pour la réalisation d'un renfort métallique d'un bord de fuite d'une aube de turbomachine ou encore à la réalisation d'un renfort métallique d'hélice en composite ou métallique.

Les autres avantages de l'invention sont notamment les suivants :
- réduction des coûts de réalisation ;
- réduction du temps de réalisation ;
- simplification de la gamme de fabrication ;
- réduction des coûts matière.

## Revendications

1. Procédé de réalisation (200) d'une pièce métallique (30), telle qu'un renfort métallique d'aube de turbomachine, comportant successivement :
- une étape (210) de réalisation d'une structure métallique tridimensionnelle (310) constituée par un insert (301) présentant des propriétés permettant le formage superplastique et le soudage diffusion et par une pluralité de fils métalliques (302), chaque fil métallique de ladite pluralité encerclant la périphérie dudit insert (301), ladite structure métallique (310) formant une préforme de ladite pièce métallique (30) ;
- une étape (220) de positionnement de ladite structure métallique (310) dans un outillage de forme (400) ;
- une étape (230) de pressage à chaud de ladite structure métallique tridimensionnelle (310) provoquant l'agglomération de ladite structure métallique (310) de manière à obtenir ladite pièce métallique compacte (30).

2. Procédé de réalisation (200) d'une pièce métallique (30) selon la revendication 1 **caractérisé en ce que** ledit procédé est un procédé de réalisation d'un renfort métallique de bord d'attaque, ou de bord de fuite, d'aube de turbomachine ou d'un renfort métallique d'hélice de sorte que ladite pièce métallique obtenue lors de ladite étape (230) de pressage à chaud est un renfort métallique.

3. Procédé de réalisation (200) d'une pièce métallique (30) selon l'une des revendications 1 à 2 **caractérisé en ce que** ladite étape de pressage à chaud est une étape de pressage isostatique ou une étape de forgeage isotherme.

4. Procédé de réalisation (200) d'une pièce métallique (30) selon l'une des revendications 1 à 3 **caractérisé en ce que** ladite étape de réalisation d'une structure métallique tridimensionnelle (310) comporte successivement :
- une première sous-étape de fabrication d'un insert (301) ;
- une deuxième sous-étape d'enroulement d'une pluralité de fils métalliques autour dudit insert (301).

5. Procédé de réalisation (200) d'une pièce métallique (30) selon l'une des revendications 1 à 4 **caractérisé en ce que** ladite étape de réalisation d'une structure métallique tridimensionnelle (310) comporte successivement :
- une première sous-étape de fabrication d'un insert (301) ;
- une deuxième sous-étape de pliage de ladite pluralité de fils métalliques (302) de sorte que chaque fil métallique présente au moins une boucle ;
- une troisième sous-étape d'insertion dudit insert (301) dans chacune desdites boucles de ladite pluralité de fils métalliques (302) .

6. Procédé de réalisation (200) d'une pièce métallique (30) selon l'une des revendications 4 à 5 **caractérisé en ce que** ladite sous-étape de fabrication dudit insert (301) est réalisée par forgeage ou usinage ou par coulée ou par un procédé de tissage tridimensionnel.

7. Procédé de réalisation (200) d'une pièce métallique (30) selon l'une des revendications 1 à 6 **caractérisé en ce que** ledit insert est un insert métallique.

8. Procédé de réalisation (200) d'une pièce métallique (30) selon l'une des revendications 1 à 7 **caractérisé en ce que** lesdits fils métalliques (302) de ladite pluralité sont pliés en forme de A.

9. Procédé de réalisation (200) d'une pièce métallique (30) selon l'une des revendications 1 à 8 **caractérisé en ce que** lesdits fils métalliques (302) sont des fils métalliques à base de titane et/ou des fils de SiC-Titane.

10. Procédé de réalisation (200) d'une pièce métallique (30) selon l'une des revendications 1 à 9 **caractérisé en ce que** ledit procédé comporte successivement :
- une étape (210) de réalisation d'une pluralité de structures métalliques tridimensionnelles (310) constituée par un insert (301) et par une pluralité de fils métalliques (302) entourant ledit insert (301), ladite pluralité de structures métalliques (310) formant une préforme de ladite pièce métallique (30) ;
- une étape (220) de positionnement de ladite pluralité de structures métalliques (310) dans un outillage de forme (400) :
- une étape (230) de pressage à chaud de ladite pluralité de structures métalliques tridimensionnelles (310) provoquant l'agglomération de ladite pluralité de structures métalliques (310) de manière à obtenir ladite pièce métallique (30).

## Patentansprüche

1. Realisierungsverfahren (200) eines Metallstücks (30), wie z. B. eine Metallverstärkung eines Rotorblatts einer Turbomaschine, umfassend sukzessive:
- einen Realisierungsschritt (210) einer dreidimensionalen Metallstruktur (310), die durch einen Einsatz (301), der Eigenschaften aufweist, welche die superplastische Formung und die Schweißverteilung erlauben, und durch eine Vielzahl von Metalldrähten (302) gebildet ist, wobei jeder Metalldraht der genannten Vielzahl die Peripherie des genannten Einsatzes (30) umfasst, wobei die genannte Metallstruktur (310) eine Vorform des genannten Metallstücks (30) formt;
- einen Positionierungsschritt (220) der genannten Metallstruktur (310) in einem Formwerkzeug (400);
- einen Heißpressschritt (230) der genannten dreidimensionalen Metallstruktur (310), die die Agglomeration der genannten Metallstruktur (310) derart hervorruft, dass das genannte kompakte Metallstück (30) erhalten wird.

2. Realisierungsverfahren (200) eines Metallstücks (30) gemäß Anspruch 1, **dadurch gekennzeichnet, dass** das genannte Verfahren ein Realisierungsverfahren einer Metallverstärkung einer Vorderkante oder einer Hinterkante, einer Turbomaschinenkante oder einer Metallverstärkung einer Schraube derart ist, dass das in dem genannten Heißpressschritt (230) erhaltene Metallstück eine Metallverstärkung ist.

3. Realisierungsverfahren (200) eines Metallstücks (30) gemäß irgendeinem der Ansprüche 1 bis 2, **dadurch gekennzeichnet, dass** der genannte Heißpressschritt ein isostatischer Pressschritt oder ein isothermischer Schmiedeschritt ist.

4. Realisierungsverfahren (200) eines Metallschritts (30) gemäß einem der Ansprüche 1 bis 3, **dadurch gekennzeichnet, dass** der genannte Realisierungsschritt einer dreidimensionalen Metallstruktur (310) sukzessive umfasst:
- einen ersten Herstellungsteilschritt eines Einsatzes (301);
- einen zweiten Einrollteilschritt einer Vielzahl von Metalldrähten um den genannten Einsatz (301).

5. Realisierungsverfahren (200) eines Metallstücks (30) gemäß einem der Ansprüche 1 bis 4, **dadurch gekennzeichnet, dass** der genannte Realisierungsschritt einer dreidimensionalen Metallstruktur (310) sukzessive umfasst:
- einen ersten Herstellungsteilschritt eines Einsatzes (301);
- einen zweiten Faltteilschritt der genannten Vielzahl von Metalldrähten (302) derart, dass jeder Metalldraht wenigstens eine Schleife aufweist;
- einen dritten Einfügeteilschritt des genannten Einsatzes (301) in jede der genannten Schleifen der genannten Vielzahl von Metalldrähten (302) .

6. Realisierungsverfahren (200) eines Metallstücks (30) gemäß irgendeinem der Ansprüche 4 bis 5, **dadurch gekennzeichnet, dass** der genannte Herstellungsteilschritt des genannten Einsatzes (301) per Schmieden oder Bearbeiten oder per Gießen oder durch ein dreidimensionales Webverfahren realisiert ist.

7. Realisierungsverfahren (200) eines Metallstücks (30) gemäß einem der Ansprüche 1 bis 6, **dadurch gekennzeichnet, dass** der genannte Einsatz ein Metalleinsatz ist.

8. Realisierungsverfahren (200) eines Metallstücks (30) gemäß einem der Ansprüche 1 bis 7, **dadurch gekennzeichnet, dass** die genannten Metalldrähte (302) der genannten Vielzahl in A-Form gefaltet sind.

9. Realisierungsverfahren (200) eines Metallstücks (30) gemäß einem der Ansprüche 1 bis 8, **dadurch gekennzeichnet, dass** die genannten Metalldrähte (302) Metalldrähte auf Titanbasis und / oder Drähte aus SiC-Titan sind.

10. Realisierungsverfahren (200) eines Metallstücks (30) gemäß einem der Ansprüche 1 bis 9, **dadurch gekennzeichnet, dass** das genannte Verfahren sukzessive umfasst:
- einen Realisierungsschritt (210) einer Vielzahl von dreidimensionalen Metallstrukturen (310), der durch einen Einsatz (301) und durch eine Vielzahl von den genannten Einsatz (301) umgebende Metalldrähten (302) gebildet ist, wobei die genannte Vielzahl von Metallstrukturen (310) eine Vorform des genannten Metallstücks (30) bildet;
- einen Positionierungsschritt (220) der genannten Vielzahl von Metallstrukturen (310) in einem Formwerkzeug (400):
- einen Heißpressschritt (230) der genannten Vielzahl von dreidimensionalen Metallstrukturen (310), die die Agglomeration der genannten Vielzahl von Metallstrukturen (310) derart hervorrufen, dass das genannte Metallteil (30) erhalten wird.

## Claims

1. Process for manufacturing (200) a metal part (30), such as a turbine engine blade metal reinforcement, which successively involves:
- a step (210) for manufacturing a three-dimensional metal structure (310) made up of an insert (301), which has properties which allow superplastic forming and diffusion welding to be carried out, and of plurality of metal wires (302), each metal wire of said plurality encircling periphery of said insert (301), where said metal structure (310) forms a preform of said metal part (30);
- a step (220) for positioning said metal structure (310) in a forming tool (400);
- a hot-pressing step (230) of said three-dimensional metal structure (310) which causes agglomeration of said metal structure (310), so as to obtain said compact metal part (30).

2. Process for manufacturing (200) a metal part (30) according to claim 1, **characterised in that** said process is a process for manufacturing a metal reinforcement for a leading edge or trailing edge of a blade of a turbine engine, or of a metal reinforcement of a propeller such that said metal part obtained during said hot pressing step (230) is a metal reinforcement.

3. Process for manufacturing (200) a metal part (30) according to one of claims 1 to 2 **characterised in that** said hot-pressing step is an isostatic pressing step or an isothermal forging step.

4. Process for manufacturing (200) a metal part (30) according to one of claims 1 to 3 **characterised in that** said manufacturing step for a three-dimensional metal structure (310) successively includes:
- a first sub-step for manufacturing an insert (301);
- a second sub-step for winding multiple metal wires around said insert (301).

5. Process for manufacturing (200) a metal part (30) according to one of claims 1 to 4, **characterised in that** said manufacturing step for a three-dimensional metal structure (310) successively includes:
- a first sub-step for manufacturing an insert (301);
- a second sub-step of bending said multiple metal wires (302) such that each metal wire exhibits at least one loop;
- a third sub-step of inserting said insert (301) in each of said loops of said multiple metal wires (302);

6. Process for manufacturing (200) a metal part (30) according to one of claims 4 to 5 **characterised in that** said sub-step for manufacturing said insert (301) is performed by forging or machining or casting or by a three-dimensional weaving process.

7. Process for manufacturing (200) a metal part (30) according to one of claims 1 to 6 **characterised in that** said insert is a metal insert.

8. Process for manufacturing (200) a metal part (30) according to one of claims 1 to 7 **characterised in that** said metal wires (302) of said multiple wires are bent into an A-shape.

9. Process for manufacturing (200) a metal part (30) according to one of claims 1 to 8 **characterised in that** said metal wires (302) are titanium-based wires and/or SiC-Titanium wires.

10. Process for manufacturing (200) a metal part (30) according to one of claims 1 to 9 **characterised in that** said process successively involves:
- a step (210) for the manufacture of multiple three-dimensional metal structures (310) made up of an insert (301) and of multiple metal wires (302) surrounding said insert (301), where said multiple metal structures (310) form a pre-form of said metal part (30);
- a step (220) in which said multiple metal structures (310) are positioned in a forming tool (400):
- a hot-pressing step (230) of the said multiple three-dimensional metal structures (310) which causes agglomeration of said multiple metal structures (310), so as to obtain said metal part (30).
